# EUROPÄISCHE PATENTSCHRIFT

(11) **EP 0 698 683 B1**
(45) Veröffentlichungstag und Bekanntmachung des Hinweises auf die Patenterteilung: **17.12.1997**
(21) Anmeldenummer: 95110884.4
(22) Anmeldetag: 12.07.1995
(51) Int. Cl.: D21G 1/02, F16C 13/00

(54) **Durchbiegungssteuerbare Walze für einen Kalander o. dgl.**
Deflexion controllable roll, for a calender or the like
Rouleau à fléchissement réglable pour une calandre ou similaire

(30) Priorität: 26.08.1994 DE 4430268
(43) Veröffentlichungstag der Anmeldung: 28.02.1996
(73) Patentinhaber: Voith Sulzer Finishing GmbH, 47803 Krefeld (DE)
(72) Erfinder: Autrata, Jochen, D-47445 Moers (DE); Stotz, Wolf Gunter, D-88214 Ravensburg (DE)
(74) Vertreter: Knoblauch, Ulrich, Dr.-Ing.

(56) Entgegenhaltungen:
- DE-A- 3 408 119
- DE-C- 3 827 836
- GB-A- 2 169 010
- US-A- 3 802 044

## Beschreibung

Die Erfindung bezieht sich auf eine durchbiegungssteuerbare Walze für einen Kalander o.dgl., bei der ein Walzenmantel mit Hilfe von hydrostatischen Stützelementen an einen den Walzenmantel durchsetzenden, drehfest gelagerten Träger abgestützt ist und die Stützelemente ein Kopfteil, das an seiner der Mantelinnenfläche zugewandten Stützfläche mindestens eine ringsum berandete Tasche trägt und einen Kolben, der mit einer dem Träger zugewandten Druckfläche einen Druckraum begrenzt, der einerseits mit einer Leitung im Träger und andererseits über eine Drossel mit der Tasche in Verbindung steht, aufweisen.

Eine solche Walze ist beispielsweise aus US-PS 3 802 044 bekannt. Sie ist nicht nur für Kalander, sondern auch für Glättwerke, Pressen, Partien von Papier-, Zellstoff- und Druckmaschinen oder Walzwerke für Stahl, Kunststoff u.dgl. geeignet.

Im bekannten Fall greift der Kolben des Stützelements in eine radiale Bohrung des Trägers. Die Stützfläche ist kreisförmig. Der Bereich der hierdurch aufbringbaren Kraft ist begrenzt, weil die zur Verfügung stehenden Öldrücke nach unten durch die Funktion der Druckregelventile und nach oben durch die verwendeten Materialien begrenzt sind. Es ist daher nicht möglich, ein und dieselbe durchbiegungssteuerbare Walze wahlweise mit sehr kleinen und mit sehr großen Streckenlasten im Walzenspalt zu betreiben.

Der Erfindung liegt daher die Aufgabe zugrunde, eine durchbiegungssteuerbare Walze der eingangs beschriebenen Art anzugeben, die den Bedürfnissen der Praxis hinsichtlich des Bereichs der einstellbaren Streckenlast noch besser gerecht wird.

Diese Aufgabe wird erfindungsgemäß dadurch gelöst, daß mindestens eines der Stützelemente als inneres Stützelement von einem ringförmigen äußeren Stützelement umschlossen ist, und letzteres ein äußeres Kopfteil, das an seiner der Mantelinnenfläche zugewandten Stützfläche eine weitere zumindest außen ringsum berandete, ringförmige äußere Tasche trägt, und einen äußeren Kolben, der mit einer dem Träger zugewandten, ringförmigen, äußeren Druckfläche einen äußeren Druckraum begrenzt, der einerseits mit einer zweiten Leitung im Träger und andererseits über eine zweite Drossel mit der äußeren Tasche in Verbindung steht, aufweist.

Bei dieser Konstruktion sind einem Stützbereich ohne wesentlichen Mehrbedarf an Platz ein inneres und ein äußeres Stützelement zugeordnet. Diese können einzeln für sich oder gemeinsam betätigt werden. Hierdurch lassen sich, wie später noch genauer erläutert wird, sehr unterschiedliche Kräfte aufbringen, so daß sich ein außerordentlich großer Bereich der einstellbaren Streckenlast ergibt.

Mit Vorteil sind innerer und äußerer Kolben längs einer Zylinderfläche aneinander geführt. Da beide Kolben aneinander anliegen, ergibt sich eine besonders raumsparende Ausführung.

Günstig ist es, daß der innere Kolben zylindrisch ist, in eine zylindrische Bohrung eingreift und mit ihr den inneren Druckraum bildet, und daß der äußere Kolben hohlzylindrisch ist, in einen im Durchmesser vergrößerten Fortsatz der zylindrischen Bohrung eingreift und mit diesem sowie dem inneren Kolben den äußeren Druckraum bildet. Dies führt zu einer einfachen Konstruktion mit leicht herstellbaren Teilen.

Von Vorteil ist es ferner, daß am inneren Kolben ein Mitnehmer befestigt ist, der den äußeren Kolben untergreift und das äußere Stützelement in Hubrichtung mitzunehmen vermag. Der Mitnehmer sorgt dafür, daß bei alleiniger Betätigung des inneren Stützelements keine unerwünschte Verlagerung des äußeren Stützelements erfolgt.

Bei einem bevorzugten Ausführungsbeispiel ist dafür gesorgt, daß das innere Kopfteil einen größeren Außendurchmesser hat als der innere Kolben und daß das äußere Kopfteil einen größeren Außendurchmesser hat als der äußere Kolben sowie zur Aufnahme des inneren Kopfteils eine stufenförmige Vertiefung besitzt, deren Außendurchmesser demjenigen des inneren Kopfteils entspricht. Die Vergrößerung der Kopfteile erlaubt es, größere Taschenflächen vorzusehen, wie es für einen optimalen Betrieb erwünscht ist.

Ein weiterer Vorteil ergibt sich, wenn der zylindrische Spalt zwischen innerem und äußerem Kolben sowie zwischen innerem und äußerem Kopfteil durch je eine Ringdichtung abgedichtet ist und über einen zwischen den Ringdichtungen vorgesehenen Kanal mit dem Ringraum zwischen Walzenmantel und Träger in Verbindung steht. Durch diesen Verbindungskanal steht die Stufenfläche der Vertiefung unter neutralem Umgebungsdruck.

Günstig ist es auch, daß die Höhe des inneren Kopfteils zwischen seiner Unterseite und der Außenfläche des Randes der inneren Tasche kleiner ist als die Höhe der Vertiefung zwischen ihrem Grund und der Außenfläche des Randes der äußeren Tasche. Bei dieser Ausgestaltung ergibt sich an der Stufe der Vertiefung ein Spalt, der eine radiale Einwärtsbewegung des inneren Stützelements ermöglicht, so daß bei Betätigung nur des äußeren Stützelements lediglich im Bereich des Randes der äußeren Tasche Reibungsverluste auftreten können.

Vorzugsweise sind inneres Stützelement und äußeres Stützelement gegenüber dem Träger pendelnd gehalten. Dies erlaubt eine Anpassung der Stützflächen an die Innenfläche des Mantels, auch wenn der Träger und/oder der Mantel sich verformen.

Eine besonders günstige Konstruktion dieser Art besteht darin, daß der innere Kolben und der äußere Kolben in einem Lagerelement mit kugeliger Oberfläche geführt sind, das in einer sphärischen Fassung des Trägers gelagert ist.

Hierbei ist es empfehlenswert, daß an der Grenzfläche von Lagerelement und Fassung eine zentrische Nut und eine diese konzentrisch umgebende Ringnut vorgesehen ist, über die Druckmittel zu dem inneren Druckraum und dem äußeren Druckraum zugeleitet wird. Die Nuten erlauben die Druckmittelzufuhr auch bei der Pendelbewegung. Außerdem führen sie bei entsprechender Bemessung im Vergleich zu den Druckräumen zu einer hydraulischen Entlastung des Lagerelements.

Desweiteren empfiehlt es sich, daß innere Tasche und/oder äußere Tasche durch Trennstege in mehrere in Umfangsrichtung der Kolben versetzte Teiltaschen unterteilt sind, die je über eine Drossel mit dem inneren bzw. äußeren Druckraum verbunden sind. Durch die einzeln mit Druckmittel versorgten Teiltaschen ergibt sich eine hohe Lagestabilisierung der Stützelemente.

Eine Verbesserung ergibt sich auch dadurch, daß zumindest die Drossel n im inneren Kolben durch ein zur Druckkammer hin öffnendes Rückschlagventil überbrückt sind. Wenn lediglich die äußere Tasche mit Druckmittel versorgt wird, stellt das Rückschlagventil sicher, daß sich in der inneren Tasche kein Druck aufbaut.

Die Erfindung wird nachstehend anhand in der Zeichnung dargestellter, bevorzugter Ausführungsbeispiele näher erläutert. Es zeigen:
- Fig. 1: einen Längsschnitt durch einen Stützbereich einer erfindungsgemäßen Walze,
- Fig. 2: eine Draufsicht auf das innere und äußere Stützelement der Fig. 1,
- Fig. 3: einen Längsschnitt durch einen Stützbereich einer abgewandelten Walze und
- Fig. 4: eine Draufsicht auf das innere und äußere Stützelement der Fig. 3.

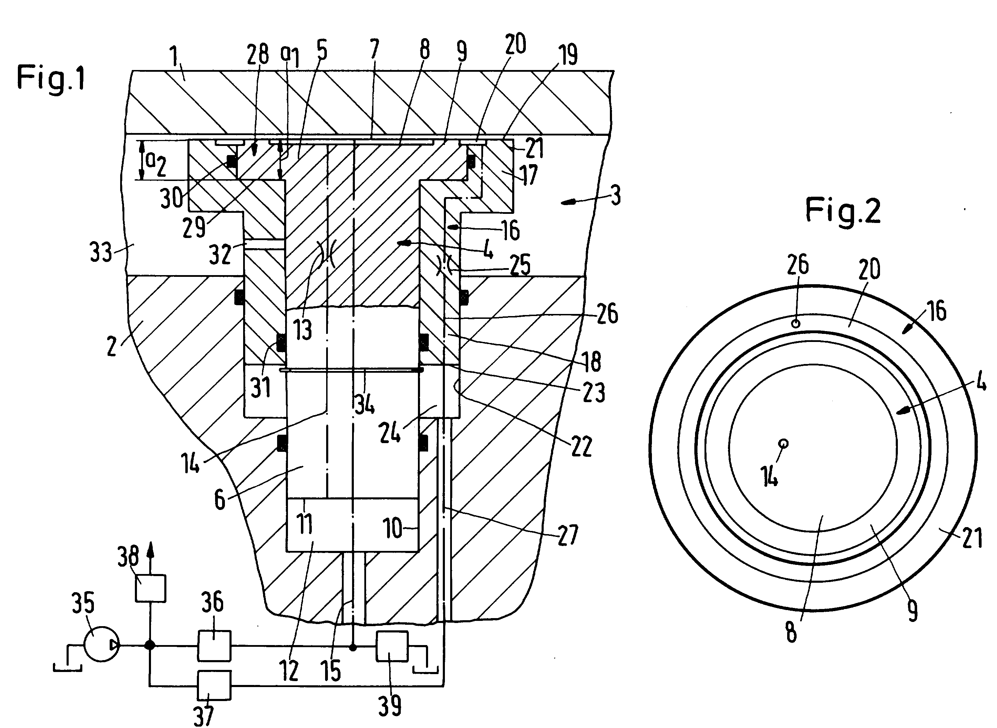

Ein Walzenmantel 1 wird von einem drehfest gehaltenen Träger 2 durchsetzt und auf ihm durch eine Stützelementkombination 3 abgestützt. Wie US-PS 3 802 044 zeigt, können mehrere Stützbereiche axial nebeneinander angeordnet sein. Da sie alle in gleicher Weise ausgebildet sein können wie in Fig. 1, ist nur solcher Stützbereich veranschaulicht. Insbesondere kann der Walzenmantel 1 mit einer Gegenwalze zusammenwirken, so daß ein Walzenspalt entsteht, in welchem Papier oder anderes Material durch Preßkräfte behandelt wird.

Die Stützelementkombination 3 umfaßt ein inneres Stützelement 4, das einen Kopfteil 5 und einen zylindrischen Kolben 6 aufweist. Das Kopfteil trägt eine Stützfläche 7, in der sich eine Tasche 8 befindet, welche ringsum von einem Rand 9 umschlossen ist. Der Kolben 6 greift in eine zylindrischen Bohrung 10 und trägt eine Druckfläche 11, die zusammen mit der Bohrung 10 einen Druckraum 12 begrenzt. Dieser ist einerseits über eine mit einer Drossel 13 versehene Leitung 14 mit der Tasche 8 und andererseits mit einer Leitung 15 im Träger 2 verbunden.

Ein äußeres Stützelement 16 weist ein Kopfteil 17 und einen hohlzylindrischen Kolben 18 auf. Das Kopfteil trägt eine ringförmige Stützfläche 19 mit einer ringförmigen Tasche 20, die außen von einem Rand 21 umgeben ist. Der Kolben 18 greift in einen im Durchmesser vergrößerten Fortsatz 22 der Bohrung 10 und ist innen auf dem Kolben 6 geführt. Der Kolben 18 besitzt eine ringförmige Druckfläche 23, die zusammen mit dem Fortsatz 22 und dem Kolben 6 einen ringförmigen Druckraum 24 bildet. Dieser ist einerseits über eine mit einer Drossel 25 versehenen Leitung 26 mit der Tasche 20 und andererseits mit einer Leitung 27 im Träger 2 verbunden.

Das innere Kopfteil 5 hat einen größeren Außendurchmesser als der zugehörige Kolben 6. Das äußere Kopfteil 17 hat einen größeren Außendurchmesser als der zugehörige Kolben 18. Auf diese Weise kann den druckwirksamen Stützflächen 7 und 19 eine über die zugehörigen Druckflächen 11 bzw. 23 hinausgehende Größe gegeben werden, wie dies für einen optimalen Betrieb wünschenswert ist. Des weiteren ist in dem äußeren Kopfteil 17 eine Vertiefung 28 mit einer Stufe 29 vorgesehen, welche der Aufnahme des inneren Kopfteils 5 dient. Durch eine Ringdichtung 30 zwischen der Umfangsfläche des inneren Kopfteils 5 und der Innenfläche der Vertiefung 28 wird verhindert, daß der in der Tasche 20 herrschende Druck auch auf die Unterseite des Kopfteils 5 wirkt. Hierbei ist es zweckmäßig, zwischen dieser Ringdichtung 30 und einer Ringdichtung 31 zwischen den beiden Kolben 6 und 18 einen Kanal 32 vorzusehen, der zum Zwischenraum 33 zwischen Walzenmantel 1 und Träger 2 führt. Der dort herrschende Umgebungsdruck wirkt dann auch auf die untere Ringfläche des Kopfteils 5.

Mit al ist die Höhe des inneren Kopfteils 5 zwischen seiner Unterseite und der Außenfläche des Randes 9 bezeichnet, mit a2 die Höhe der Vertiefung 28 zwischen ihrem Grund 29 und der Außenfläche des Randes 19 der äußeren Tasche 19. Bei einer Betätigung des äußeren Stützelements 16 wird daher das innere Stützelement 4 mitgenommen. Des weiteren ist eine Ringfeder als Mitnehmer 34 am Kolben 6 vorgesehen, welche den Kolben 18 untergreift und daher bei einer Betätigung des inneren Stützelements 4 das äußere Stützelement 16 mitnimmt. In der Regel sind die Höhen al und a2 gleich groß. In manchen Fällen ist es jedoch von Vorteil, al etwas kleiner zu halten als a2, wie nachstehend noch erläutert wird.

Schematisch ist eine Druckölversorgung veranschaulicht. Eine Druckquelle 35, hier in der Form einer Pumpe, bedient drei absperrbare Druckregler 36, 37 und 38.

Ist der Druckregler 36 eingeschaltet, vermag er über die Leitung 15 Druckflüssigkeit in den Druckraum 12 zu leiten, wodurch das innere Stützelement 4 betätigt wird. Das geförderte Öl fließt über die Leitung 14 und die Drossel 13 in die Tasche 8 und weiter über die Ränder 9 und 19 in den Ringraum 33 ab.

Wenn der Druckregler 37 aktiviert ist, fördert er Druckflüssigkeit über die Leitung 27 in den Druckraum 24. Hierdurch wird das äußere Stützelement 16 betätigt.

Das geförderte Öl gelangt über die Leitung 26 und die Drossel 25 in die äußere Tasche 20, von wo sie über den Rand 19 in den Ringraum 33 und gegebenenfalls auch über den Rand 9 in die Tasche 8 abfließen kann.

Der Druckregler 38 dient dazu, den Druck im Ringraum 33 auf einem gewählten Wert zu halten.

Schließlich besteht noch die Möglichkeit, mit Hilfe eines einfachen Absperrventils 39 die Leitung 15 mit der Abflußseite zu verbinden, so daß das innere Stützelement 4 als Drucksenke arbeitet. Hierfür sollte die Drossel 13 durch ein Rückschlagventil überbrückt sein.

Auf diese Weise ergeben sich die folgenden Betriebsweisen.
1) Betrieb nur des inneren Stützelements 4:
   Es wird die Zuleitung 27 durch den Druckregler 37 verschlossen und lediglich der Druckraum 12 mit Druckmittel über die Leitung 15 versorgt. Das innere Stützelement 4 arbeitet dann wie ein herkömmliches Stützelement mit einer Kraft, welche durch den Druck in der Tasche 8 und die effektive Stützfläche 7 dieses inneren Stützelements 4 vorgegeben ist. Hierbei kann das äußere Stützelement durch den Mitnehmer 34 mit angehoben werden. Auf diese Weise läßt sich ein niedriges Streckenlastniveau mit günstigem Druck-Kraft-Verhältnis erzielen.
2) Betrieb nur des äußeren Stützelements 16:
   Hierbei wird die Zuleitung 15 mit Hilfe des Druckreglers 36 verschlossen und lediglich der Druckraum 24 mit Druckflüssigkeit versorgt. Der in der zugehörigen Tasche 20 herrschende Druck wirkt auch in der Tasche 8 des inneren Stützelements 4. Da die Summe der Stützflächen 7 und 19 wirksam ist, kann der Walzenmantel mit hoher Streckenlast arbeiten, obwohl lediglich moderate Drücke angewendet werden. Ist die Höhe al kleiner als die Höhe a2, entstehen Reibungsverluste lediglich am Spalt zwischen dem äußeren Rand 21 und dem Walzenmantel 1.
3) Betrieb beider Stützelemente 4 und 16:
   Hierbei ist es möglich, den Druckräumen 12 und 24 unterschiedliche Drücke zuzuführen. Wenn beispielsweise der Umgebungsdruck im Zwischenraum 33 auf einen Wert ungleich Null eingestellt wird, kann in der äußeren Tasche 20 ein Druck größer als der Umgebungsdruck und in der inneren Tasche 8 ein Druck kleiner oder größer als der Umgebungsdruck eingestellt werden. So ist eine Betriebsweise möglich, bei der mit dem äußeren Stützelement 16 das Niveau für die Streckenlast gehalten wird, während Lastschwankungen mit dem inneren Stützelement 4 feinfühlig eingestellt werden können. Wenn bei dieser Betriebsart die Höhe a1 gleich der Höhe a2 ist, sorgt das äußere Stützelement 16 dafür, daß beim inneren Stützelement der korrekte Spalt zwischen dem Rand 9 und dem Walzenmantel 1 eingehalten wird.

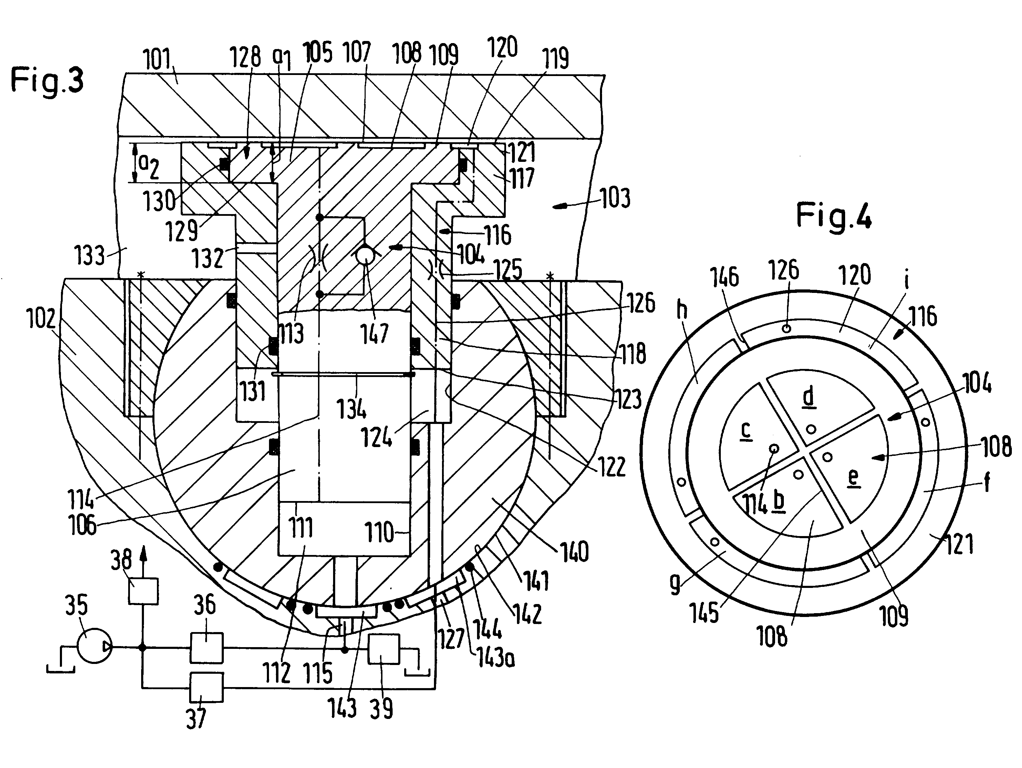

Beim Ausführungsbeispiel der Fig. 3 und 4 werden für entsprechende Teile Bezugszeichen verwendet, die um 100 gegenüber den Fig. 1 und 2 erhöht sind.

Wesentlich ist, daß das innere Stützelement 104 und das äußere Stützelement 116 in einem Lagerelement 140 geführt sind, das eine kugelförmige Oberfläche 141 besitzt und in einer zweiteiligen sphärischen Fassung 142 des Trägers 102 gelagert ist. Die Stützelemente können daher relativ zum Träger 102 pendeln. Damit trotzdem die Druckmittelzufuhr gewährleistet ist, sind entsprechende Anschlußnuten, nämlich eine zentrische Nut 143 und eine diese konzentrisch umgebende Ringnut 143a, die jeweils von einer Dichtung 144 umgeben sind, vorgesehen. Die Anschlußnuten können statt im Träger 102 auch in dem Lagerelement 140 vorgesehen sein. Durch entsprechend groß dimensionierte Anschlußnuten 143 und 143a ergibt sich eine hydraulische Entlastung des Lagerelements 140 gegenüber dem Träger 102, was die Pendelbewegung der gesamten Stützeinrichtung erleichtert.

Beim inneren Stützelement 104 ist die innere Tasche 108 durch Trennstege 145 in vier Teiltaschen b, c, d und e unterteilt, die je über eine Leitung 114 und zugehörige Drossel 113 mit dem inneren Druckraum 112 verbunden sind. In ähnlicher Weise ist die ringförmige Tasche 120 durch Trennstege 146 in Teiltaschen f, g, h und i unterteilt, die jeweils über eine Leitung 126 mit zugehöriger Drossel 125 mit dem ringförmigen Druckraum 24 verbunden sind. In diesem Fall ist die ringförmige Tasche 120 innen durch die Umfangswand des Kopfteils 105 begrenzt.

Die pendelnde Lagerung der Stützelemente erlaubt eine Anpassung der Stützflächen an die Innenfläche des Mantels 101, wodurch sich ein gleichmäßiger Schmierspalt über die gesamte Stützfläche ergibt. Durch Verwendung der Teiltaschen a bis h erfolgt diese Anpassung automatisch. Es ergibt sich eine große Lagestabilität.

Die Drossel 113 in der Leitung 114 ist durch ein Rückschlagventil 147 überbrückt, das zum Druckraum 112 hin öffnet. Es kann sich daher in der Tasche 108 des inneren Stützelements 104 kein Druck aufbauen, wenn lediglich der ringförmigen Tasche 120 Druckmittel zugeführt wird.

Von der veranschaulichten Ausführungsform kann in vielfacher Hinsicht abgewichen werden, ohne den Grundgedanken der Erfindung zu verlassen. Beispielsweise können weniger oder mehr als vier Teiltaschen vorgesehen sein.

Es besteht auch die Möglichkeit, den Kolben 6 des inneren Stützelements 4 zu verkürzen und vollständig in dem äußeren Stützelement 16 zu führen, wobei der ringförmige Kolben 18 des äußeren Stützelements 16 in einer entsprechenden ringförmigen Nut des Trägers 2 bzw. des Lagerelements 140 geführt ist.

## Patentansprüche

1. Durchbiegungssteuerbare Walze für einen Kalander o.dgl., bei der ein Walzenmantel (1; 101) mit Hilfe von hydrostatischen Stützelementen (4; 104) an einem den Walzen- mantel durchsetzenden, drehfest gelagerten Träger (2; 102) abgestützt ist und die Stützelemente (4; 104) ein Kopfteil (5; 105), das an seiner der Mantelinnenfläche zugewandten Stützfläche (7; 107) mindestens eine ringsum berandete Tasche (8; 108) trägt, und einen Kolben (6; 106), der mit einer dem Träger (2; 102) zugewandten Druckfläche (11; 111) einen Druckraum (12; 112) begrenzt, der einerseits mit einer Leitung (15, 115) im Träger (2; 102) und andererseits über eine Drossel (13; 113) mit Tasche (8; 108) in Verbindung steht, aufweisen, dadurch gekennzeichnet, daß mindestens eines der Stützelemente als inneres Stützelement (4; 104) von einem ringförmigen äußeren Stützelement (16; 116) umschlossen ist und letzteres ein äußeres Kopfteil (17; 117), das an seiner der Mantelinnenfläche zugewandten Stützfläche (19; 119) eine weitere zumindest außen ringsum berandete, ringförmige äußere Tasche (20; 120) trägt, und einen äußeren Kolben (18; 118), der mit einer dem Träger (2; 102) zugewandten, ringförmigen, äußeren Druckfläche (23; 123) einen äußeren Druckraum (24; 124) begrenzt, der einerseits mit einer zweiten Leitung (27; 127) im Träger (2; 102) und andererseits über eine zweite Drossel (25; 125) mit der äußeren Tasche (20; 120) in Verbindung steht, aufweist.

2. Walze nach Anspruch 1, dadurch gekennzeichnet, daß innerer und äußerer Kolben (6, 18; 106, 118) längs einer Zylinderfläche aneinander geführt sind.

3. Walze nach Anspruch 1 oder 2, dadurch gekennzeichnet, daß der innere Kolben zylindrisch ist, in eine zylindrische Bohrung (10; 110) eingreift und mit ihr den inneren Druckraum (12; 112) bildet, und daß der äußere Kolben (18; 118) hohlzylindrisch ist, in einen im Durchmesser vergrößerten Fortsatz (22; 122) der zylindrischen Bohrung (10; 110) eingreift und mit diesem sowie dem inneren Kolben (6; 106) den äußeren Druckraum (24; 124) bildet.

4. Walze nach einem der Ansprüche 1 bis 3, dadurch gekennzeichnet, daß am inneren Kolben (6; 106) ein Mitnehmer (34; 134) befestigt ist, der den äußeren Kolben (18; 118) untergreift und das äußere Stützelement (16; 116) in Hubrichtung mitzunehmen vermag.

5. Walze nach einem der Ansprüche 1 bis 4, dadurch gekennzeichnet, daß das innere Kopfteil (5; 105) einen größeren Außendurchmesser hat als der innere Kolben (6; 106) und daß das äußere Kopfteil (17; 117) einen größeren Außendurchmesser hat als der äußere Kolben (18; 118) sowie zur Aufnahme des inneren Kopfteils (5; 105) eine stufenförmige Vertiefung (28; 128) besitzt, deren Außendurchmesser demjenigen des inneren Kopfteils (5; 105) entspricht.

6. Walze nach Anspruch 5, dadurch gekennzeichnet, daß der zylindrische Spalt zwischen innerem und äußerem Kolben (6, 18; 106, 118) sowie zwischen innerem und äußerem Kopfteil (5, 17; 105, 117) durch je eine Ringdichtung (30, 31; 130, 131) abgedichtet ist und über einen zwischen den Ringdichtungen vorgesehenen Kanal (32; 132) mit dem Ringraum (33; 133) zwischen Walzenmantel (1; 101) und Träger (2; 102) in Verbindung steht.

7. Walze nach Anspruch 5 oder 6, dadurch gekennzeichnet, daß die Höhe (a1) des inneren Kopfteils (5; 105) zwischen seiner Unterseite und der Außenfläche des Randes (9; 109) der inneren Tasche (8; 108) kleiner ist als die Höhe (a2) der Vertiefung (28; 128) zwischen ihrem Grund (29; 129) und der Außenfläche des Randes (21; 121) der äußeren Tasche (20; 120).

8. Walze nach einem der Ansprüche 1 bis 7, dadurch gekennzeichnet, daß inneres Stützelement (104) und äußeres Stützelement (116) gegenüber dem Träger (102) pendelnd gehalten sind.

9. Walze nach Anspruch 8, dadurch gekennzeichnet, daß der innere Kolben (106) und der äußere Kolben (118) in einem Lagerelement (140) mit kugeliger Oberfläche (141) geführt sind, das in einer sphärischen Fassung (142) des Trägers (102) gelagert ist.

10. Walze nach Anspruch 9, dadurch gekennzeichnet, daß an der Grenzfläche von Lagerelement (140) und Fassung (142) eine zentrische Nut (143) und eine diese konzentrisch umgebende Ringnut (143a) vorgesehen ist, über die Druckmittel zu dem inneren Druckraum (112) und dem äußeren Druckraum (124) zugeleitet wird.

11. Walze nach einem der Ansprüche 1 bis 10, dadurch gekennzeichnet, daß innere Tasche (108) und/oder äußere Tasche (120) durch Trennstege (145, 146) in mehrere in Umfangsrichtung der Kolben versetzte Teiltaschen (b bis i) unterteilt sind, die je über eine Drossel (113, 125) mit dem inneren bzw. äußeren Druckraum (112, 124) verbunden sind.

12. Walze nach einem der Ansprüche 1 bis 11, dadurch gekennzeichnet, daß zumindest die Drossel n (113) im inneren Kolben (106) durch ein zur Druckkammer (112) hin öffnendes Rückschlagventil (147) überbrückt sind.

## Claims

1. Flexion controllered roller for a calender or the like in which a roller mantle (1; 101) is supported with the aid of hydrostatic support elements (4, 104) on a support (2, 102) passing through the roller mantle and mounted in non-slipping manner, and the support elements (4, 104) have a head part (5, 105), which on its support area (7, 107) facing the inner surface of the mantle carries at least one all-round marginate pocket (8, 108), and a piston (6, 106), which with a pressure surface (11, 111) facing the support (2, 102) bounds a pressure chamber (12, 112) which is connected on the one hand to a conduit (15, 115) in the support (2, 102) and on the other hand to the pocket (8, 108) via a throttle (13, 113), characterised in that at least one of the support elements is enclosed as an inner support element (4; 104) by an annular outer support element (16; 116) and the latter has an outer head part (17; 117), which on its support area (19; 119) facing the inner surface of the mantle carries a further, at least externally all-round marginate, annular, outer pocket (20; 120), and an outer piston (18; 118) which, with an annular, outer pressure surface (23; 123) facing the support (2; 102) bounds an outer pressure chamber (24; 124) which is connected on the one hand to a second conduit (27; 127) in the support (2; 102) and on the other hand to the outer pocket (20; 120) via a second throttle (25; 125).

2. Roller according to Claim 1, characterised in that the inner and outer piston (6, 18; 106, 118) are guided adjoining one another along a cylindrical surface.

3. Roller according to Claim 1 or 2, characterised in that the inner piston is cylindrical, engages in a cylindrical bore (10; 110) and with it forms the internal pressure chamber (12; 112) and that the outer piston (18; 118) is a hollow cylinder, engages in an extension (22; 122) of enlarged diameter of the cylindrical bore (10; 110) and together with the latter as well as the inner piston (6; 106) forms the outer pressure chamber (24; 124).

4. Roller according to one of Claims 1 to 3, characterised in that on the inner piston (6; 106) a carrier device (34; 134) is fastened which engages under the outer piston (18; 118) and is capable of carrying the outer support element (16; 116) along in the direction of the stroke.

5. Roller according to one of Claims 1 to 4, characterised in that that the inner head part (5; 105) has a greater external diameter than the inner piston (6; 106) and that the outer head part (17; 117) has a greater external diameter than the outer piston (18; 118) and, for receiving the inner head part (5; 105), possesses a steplike depression (28; 128) the outer diameter of which corresponds to that of the inner head part (5; 105).

6. Roller according to Claim 5, characterised in that the cylindrical gap between the inner and outer piston (6, 18; 106, 118) as well as between the inner and outer head part (5, 17; 105, 117) is sealed in each case by a ring seal (30, 31; 130, 131) and connected to the annular space (33; 133) between the roller mantle (1; 101) and support (2; 102) via a channel (32; 132) provided between the ring seals.

7. Roller according to Claim 5 or 6, characterised in that the height (al) of the inner head part (5; 105) between its lower side and the outer surface of the edge (9; 109) of the inner pocket (8; 108) is smaller than the height (a2) of the depression (28; 128) between its bottom (29; 129) and the outer surface of the edge (21; 121) of the outer pocket (20; 120).

8. Roller according to one of Claims 1 to 7, characterised in that the inner support element (104) and outer support element (116) are held in pendulating manner with respect to the support (102).

9. Roller according to Claim 8, characterised in that the inner piston (106) and the outer piston (118) are led in a bearing element (140) having a spherical surface (141) which is mounted in a spherical fitting (142) of the support (102).

10. Roller according to Claim 9, characterised in that at the boundary surface of the bearing element (140) and fitting (142) a central groove (143) and an annular groove (143a) surrounding the latter concentrically is provided through which the pressure medium is supplied to the inner pressure chamber (112) and the outer pressure chamber (124).

11. Roller according to one of Claims 1 to 10, characterised in that the inner pocket (108) and/or outer pocket (120) are subdivided by partitioning webs (145, 146) into several partial pockets (b to i) which are offset in the circumferential direction of the pistons and are each connected via a throttle (113, 125) to the inner or outer pressure chamber (112, 124).

12. Roller according to one of Claims 1 to 11, characterised in that at least the throttle(s) (113) in the inner piston (106) are bypassed by a check valve (147) opening towards the pressure chamber (112).

## Revendications

1. Rouleau à flexibilité réglable pour une calandre ou analogue, dans lequel l'enveloppe de rouleau (1 ; 101) est soutenue à l'aide d'éléments hydrostatiques de soutien (4 ; 104) par un support (2 ; 102) qui traverse l'enveloppe de rouleau et qui est monté de manière résistante à la torsion , les éléments de soutien (4 ; 104) présentant une partie tête (5 ; 105) qui porte, sur sa surface d'appui (7 ; 107) dirigée vers la face interne de l'enveloppe, au moins une poche (8 ; 108) avec un rebord tout autour, et un piston (6 ; 106) qui délimite, par une surface de pression (11 ; 111) dirigée vers le support (2 ; 102), une chambre de pression (12 112), qui communique, d'une part, avec un conduit (15 ; 115) présent dans le support (2 ; 102) et, d'autre part, par l'intermédiaire d'un étrangleur (13 ; 113), avec la poche (8 ; 108), caractérisé en ce qu'au moins l'un des éléments de soutien est entouré, en tant qu'élément intérieur de soutien (4 ; 104) par un élément extérieur de soutien (16 ; 116) de forme annulaire et en ce que ce dernier présente une partie tête extérieure (17 ; 117) qui porte, sur sa surface d'appui (19 ; 119) dirigée vers la face interne de l'enveloppe, au moins une poche extérieure (20 ; 120) supplémentaire de forme annulaire et avec un rebord tout autour au moins extérieurement, et un piston extérieur (18 ; 118) qui délimite, par une surface extérieure de pression (23 ; 123) dirigée vers le support (2 ; 102), une chambre extérieure de pression (24 ; 124) qui communique, d'une part, avec un deuxième conduit (27 ; 127) présent dans le support (2 ; 102) et, d'autre part, par l'intermédiaire d'un deuxième étrangleur (25 ; 125), avec la poche extérieure (20 120).

2. Rouleau selon la revendication 1, caractérisé en ce que les pistons intérieur et extérieur (6, 18 ; 106, 118) sont guidés l'un contre l'autre le long d'une surface cylindrique.

3. Rouleau selon la revendication 1 ou 2, caractérisé en ce que le piston intérieur est cylindrique, pénètre dans un alésage cylindrique (10 ; 110) et constitue avec celui-ci la chambre intérieure de pression (12 ; 112), et en ce que le piston extérieur (18 ; 118) est en forme de cylindre creux, pénètre dans un prolongement (22 ; 122) à augmentation de diamètre de l'alésage cylindrique (10 ; 110) et constitue avec celui-ci ainsi qu'avec le piston intérieur (6 ; 106), la chambre extérieure de pression (24 ; 124).

4. Rouleau selon l'une des revendications 1 à 3, caractérisé en ce qu'un entraîneur (34 ; 134) est fixé contre le piston intérieur (6 ; 106) pour venir en contact par le dessous avec le piston extérieur (18 ; 118), afin de pouvoir entraîner l'élément extérieur de soutien (16 ; 116) dans le sens de la course.

5. Rouleau selon l'une des revendications 1 à 4, caractérisé en ce que la partie tête intérieure (5 ; 105) a un plus grand diamètre extérieur que le piston intérieur (6 ; 106), et en ce que la partie tête extérieure (17 ; 117) a un plus grand diamètre extérieur que le piston extérieur (12 ; 112) et comporte, pour recevoir la partie tête intérieure (5 ; 105), un évidement (28 ; 128) en gradin dont le diamètre extérieur correspond à celui de la partie tête intérieure (5 105).

6. Rouleau selon la revendication 5, caractérisé en ce que l'interstice cylindrique entre pistons intérieur et extérieur (6, 18 ; 106, 118) ainsi qu'entre parties têtes intérieure et extérieure (5, 17 ; 105, 117) est chaque fois rendu étanche par un anneau d'étanchéité (30, 31 ; 130, 131) et en ce qu'il communique, par l'intermédiaire d'un passage (32 ; 132) prévu entre les anneaux d'étanchéité, avec l'espace annulaire (33 ; 133) situé entre enveloppe de rouleau (1 ; 101) et support (2 ; 102).

7. Rouleau selon la revendication 5 ou 6, caractérisé en ce que la hauteur (al) de la partie tête intérieure (5 ; 105), entre sa face inférieure et la surface extérieure du rebord (9 ; 109) de la poche intérieure (8 ; 108) est plus petite que la hauteur (a2) de l'évidement (28 , 128) entre son fond (29 ; 129) et la surface extérieure du rebord (21 ; 121) de la poche extérieure (20 ; 120).

8. Rouleau selon l'une des revendications 1 à 7, caractérisé en ce que l'élément intérieur de soutien (104) et l'élément extérieur de soutien (116) sont maintenus oscillants par rapport au support (102).

9. Rouleau selon la revendication 8, caractérisé en ce que le piston intérieur (106) et le piston extérieur (118) sont guidés dans un élément formant palier (140) présentant une surface du type globe (141) et monté dans un logement sphérique (142) du support (102).

10. Rouleau selon la revendication 9, caractérisé en ce qu'il est prévu, au niveau de la surface de séparation de l'élément formant palier (140) et du logement (142), une rainure centrée (143) et une rainure annulaire (143a), entourant celle-ci de manière concentrique, pour permettre l'amenée d'un moyen de pression à la chambre intérieure de pression (112) et à la chambre extérieure de pression (124).

11. Rouleau selon l'une des revendications 1 à 10, caractérisé en ce que la poche intérieure (108) et/ou la poche extérieure (120) est ou sont divisée(s) par des barrettes de séparation (145, 146) en plusieurs poches partielles (b à i) qui sont décalées dans le sens circonférentiel des pistons, et qui sont chacune reliées, par l'intermédiaire d'un étrangleur (113, 125) à la chambre intérieure ou extérieure de pression (112, 124).

12. Rouleau selon l'une des revendications 1 à 11, caractérisé en ce qu'au moins l'étrangleur (113) du piston intérieur (106) est mis en dérivation par un clapet antiretour (147) s'ouvrant vers la chambre de pression (112).
